# EUROPEAN PATENT SPECIFICATION

(11) **EP 3 726 751 B1**
(45) Date of publication and mention of the grant of the patent: **03.01.2024**
(21) Application number: 18887497.8
(22) Date of filing: 05.11.2018
(51) Int. Cl.: H04B 10/29, H04B 10/03, H04B 10/075, H04J 14/02

(54) **SUBMARINE OPTICAL TRANSMISSION DEVICE AND SUBMARINE OPTICAL COMMUNICATION SYSTEM**
OPTISCHE UNTERWASSERÜBERTRAGUNGSVORRICHTUNG UND OPTISCHES UNTERWASSERKOMMUNIKATIONSSYSTEM
DISPOSITIF DE TRANSMISSION OPTIQUE SOUS-MARIN ET SYSTÈME DE COMMUNICATION OPTIQUE SOUS-MARIN

(30) Priority: 15.12.2017 JP 2017240976
(43) Date of publication of application: 21.10.2020
(73) Proprietor: NEC Corporation, 108-8001 Tokyo (JP)
(72) Inventor: UGAJIN Kazusa, Tokyo 108-8001 (JP); ARAI Narihiro, Tokyo 108-8001 (JP)
(74) Representative: Reeve, Nicholas Edward
(86) International application number: PCT/JP2018/040963
(87) International publication number: WO 2019/116776

(56) References cited:
- EP-A1- 3 089 382
- EP-A2- 1 276 254
- EP-B1- 3 089 382
- WO-A1-2017/159519
- JP-A- 2009 117 970
- JP-A- 2013 520 139
- US-A1- 2009 116 834
- US-A1- 2011 200 322

## Description

### Technical Field

The present disclosure relates to a submarine optical communication apparatus and a submarine optical communication system.

### Background Art

In backbone long-distance optical communication system, for achieving large capacity communication, wavelength division multiplexing (WDM) scheme in which optical signals having different wavelengths are multiplexed and transmitted is used.

In a WDM optical system, a ROADM (Reconfigurable Optical Add/Drop Multiplexer) apparatus that controls signal transmission for each wavelength is disposed. The ROADM apparatus inserts (adds) and branches (drops) the signal for each wavelength.

Application of the ROADM apparatus to a submarine optical cable system is also in progress. In such a system, a submarine optical communication apparatus that is the ROADM apparatus is disposed to control a submarine optical signal transmission path. For example, various optical components such as a wavelength selectable switch (WSS) and an optical amplification device (e.g. a laser device) are disposed in the submarine optical communication apparatus.

For example, a submarine branching apparatus including optical components such as an optical switch and a filter for achieving Add and Drop has been proposed (Patent Literature 1). In this example, the optical component is controlled by a control unit.

Further, an optical signal transmission system that communicates a control signal superimposed with a main signal between terminal stations and controls the terminal station in response to the received control signal has been proposed (Patent Literature 2).

EP3089382 discloses an optical add/drop multiplexer branching unit, where the optical add/drop multiplexer branching unit includes: a trunk input end, a branch input end, a trunk output end, a branch output end, an optical add/drop multiplexer, a first coupler, a first detection circuit, and a control circuit, where the optical add/drop multiplexer includes an optical switch. A detection circuit detects whether a fault occurs in a trunk, and in a case in which a fault occurs in the trunk, a working mode is switched from a first working mode to a second working mode, to implement automatic redundancy on the trunk and ensure normal communication on a branch. According to the foregoing solution, a redundancy function is implemented without integrating an amplifier.

US2009/1 16834 discloses an apparatus comprising an optical level controller for autonomously controlling an optical device such that an optical level of the supplied optical signal becomes an objective level, and a controlled variable storer for storing a controlled variable in storage if a restart is required. The optical level controller provides the controlled variable to control the optical signal, wherein the optical level controller starts the control of optical device after the restart while the controlled variable stored in the storage by the controlled variable storer is set at an initial value.

EP1276254 discloses an optical repeating system including an optical transmitter and an optical amplifying repeater. The optical transmitter transmits a supervisory command and a control command to the optical amplifying repeater as a first sub-signal. The supervisory command is a command to supervise internal circuits of the optical amplifying repeater, and the control command is a command to control the optical amplifying repeater. The optical amplifying repeater includes multiple sub-modules each for amplifying and repeating main signals on multiple sets of optical transmission lines. When receiving the supervisory command via the optical transmission line, each sub-module transmits a supervisory signal indicating the supervisory result associated with the supervisory command to an optical receiver as a second sub-signal. In addition, when receiving a predetermined control command via the optical transmission line, each sub-module initializes another sub-module of the multiple sub-modules in response to the predetermined control command. The optical amplifying repeater can restart its control program even when it has fallen into a state where it is difficult to continue to execute the normal operation in accordance with the control program because of some exception or the like.

US2011/200322 indicates that fault tolerance may be achieved in a branched optical communication system such that a fault in one optical path does not affect optical signals coupled from a healthy optical path. In general, a flexible branching unit is configured, when adding and dropping channels, to select channels from a healthy path and not from the faulty path (e.g., a trunk path or a branch path) to prevent non-uniform channel loading on the trunk path after the branching unit. In this manner, a fault detected on the trunk path may not affect signals from the branch path and a fault detected on the branch path may not affect signals from the trunk path, thereby providing fault tolerance. A flexible branching unit may also be capable of adjusting the number and selection of channels that are added and dropped at the branching unit.

Patent Literature 1: International Patent Publication No. WO 2012/132688
Patent Literature 2: Japanese Unexamined Patent Application Publication No.2015-2474

As the progress of complexity of the submarine optical cable system, it is required to flexibly control the transmission of optical signals even after the cable laying. In the submarine optical communication apparatus, it is possible to correspond to flexible optical signal transmission by changing the setting of the optical components such as the WSS and the optical amplification device disposed in the submarine optical communication apparatus by the control unit that is also disposed therein. Here, it may be necessary to change the setting of the control unit in order to change the setting of the optical components. However, it is impossible to change the setting of the control unit of the submarine optical communication apparatus after the cable laying with the above-described technology.

The present disclosure has been made in view of the matters mentioned above and the inventors have appreciated that it would be desirable to achieve changing a setting of a control unit disposed in a submarine optical communication apparatus after cable laying.

### SUMMARY OF THE INVENTION

The invention is defined in the independent claims to which reference should now be made. Advantageous features are set out in the dependent claims.

In a first aspect, the invention provides a submarine optical communication apparatus including: an optical component configured to process an optical signal output from an optical communication apparatus; a control unit configured to control the optical component; and a reception unit configured to receive the optical signal and a control signal, convert the control signal into an electric signal, and output the converted signal to the control unit, in which the control unit switches a control scheme of the optical component in response to the control signal converted into the electric signal, wherein the control unit comprises a programmable logic circuit, the control signal includes a first switching signal instructing to change a circuit configuration of the programmable logic circuit, and the control unit changes the circuit configuration of the programmable logic circuit in response to the switching signal converted into the electric signal to change the control scheme of the optical component.

In a second aspect, the invention provides a corresponding submarine optical communication system.

According to the present disclosure, it is possible to achieve changing a setting of a control unit disposed in a submarine optical communication apparatus after disposing undersea.

### Brief Description of Drawings

Fig. 1 schematically illustrates a configuration of a submarine optical communication system according to a first example embodiment;
Fig. 2 schematically illustrates a configuration of the submarine optical communication apparatus according to the first example embodiment;
Fig. 3 schematically illustrates a configuration of a reception unit according to the first example embodiment;
Fig. 4 schematically illustrates another configuration of the reception unit according to the first example embodiment;
Fig. 5 schematically illustrates a configuration of a programmable control unit according to the first example embodiment;
Fig. 6 schematically illustrates a configuration of a submarine optical communication apparatus according to a second example embodiment;
Fig. 7 schematically illustrates an alternative example of the submarine optical communication apparatus according to the second example embodiment;
Fig. 8 schematically illustrates a configuration of a submarine optical communication apparatus according to a third example embodiment;
Fig. 9 schematically illustrates a configuration of a submarine optical communication apparatus according to a fourth example embodiment;
Fig. 10 illustrates switching of an optical signal transmission path when malfunction of the submarine optical communication apparatus according to the fourth example embodiment occurs;
Fig. 11 illustrates an alternative example of the submarine optical communication apparatus according to the fourth example embodiment;
Fig. 12 illustrates switching of an optical signal transmission path when malfunction of the alternative example of the submarine optical communication apparatus according to the fourth example embodiment occurs;
Fig. 13 schematically illustrates a configuration of a submarine optical communication system according to a fifth example embodiment;
Fig. 14 schematically illustrates an alternative example of the submarine optical communication system according to the fifth example embodiment; and
Fig. 15 illustrates a configuration example of an optical communication apparatus according to the fifth example embodiment.

### Description of Embodiments

Hereinbelow, example embodiments of the present disclosure are explained with reference to the drawings. The same symbols are assigned to the same elements throughout the drawings and duplicated explanations are omitted as necessary.

### First example embodiment

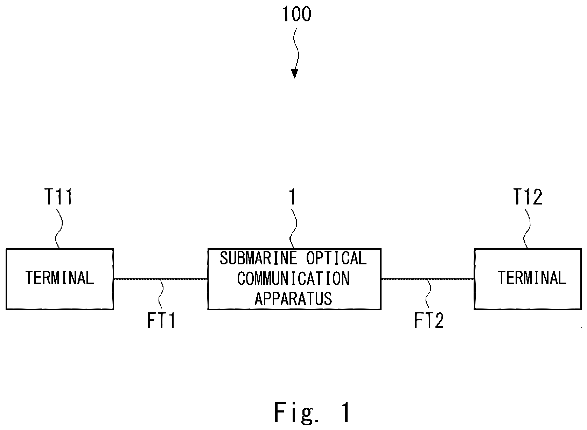

A submarine optical communication system 100 according to a first example embodiment will be described. Fig. 1 schematically illustrates a configuration of a submarine optical communication system 100 according to the first example embodiment. In the submarine optical communication system 100, a submarine optical communication apparatus 1 is inserted on a submarine optical cable that connects land-based terminal stations T11 and T12. The terminal stations T11 and T12 may be configured as a trunk station or a branch station. In Fig. 1, an optical fiber FT1 incorporated in the submarine optical cable connects the terminal station T11 and the submarine optical communication apparatus 1, and an optical fiber FT2 incorporated in the submarine optical cable connects the terminal station T12 and the submarine optical communication apparatus 1.

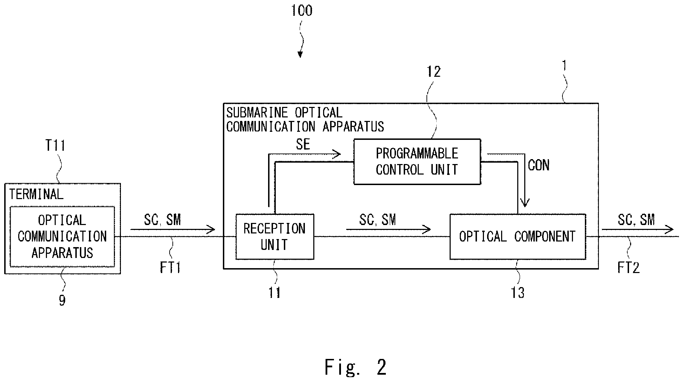

The submarine optical communication apparatus 1 will be described. Fig. 2 schematically illustrates a configuration of the submarine optical communication apparatus 1 according to the first example embodiment. For simplicity, the terminal station T12 is omitted in Fig. 2.

The land-based terminal station T11 includes an optical communication apparatus 9. The optical fiber FT1 connects the submarine optical communication apparatus 1 and the optical communication apparatus 9. In this example, the optical fiber FT1 is an optical fiber for downlink communication in which an optical signal is transmitted from the optical communication apparatus 9 to the submarine optical communication apparatus 1. That is, the optical communication apparatus 9 outputs the optical signal to the submarine optical communication apparatus 1 through the optical fiber FT1.

The optical signal output from the optical communication apparatus 9 includes a main signal SM corresponding to data to be transmitted and a control signal SC for controlling the submarine optical communication apparatus 1. In the present example embodiment, a wavelength division multiplexed signal modulated by modulation schemes such as Dual Polarization-Quadrature Phase Shift Keying (DP-QPSK) is used as the main signal SM.

The control signal SC may be superimposed or multiplexed with the main signal SM and the superimposed or multiplexed signal may be output to the submarine optical communication apparatus 1. A signal having a wavelength other than wavelengths used in the main signal SM or a signal having a wavelength that is one of the wavelengths used in the main signal SM is used as the control signal SC.
The control signal SC may be superimposed or multiplexed with the main signal SM by full-wave modulating the main signal SM (e.g. amplification modulation).

The submarine optical communication apparatus 1 is disposed undersea, and configured as a ROADM (Reconfigurable Optical Add/Drop Multiplexer) that can reconfigure an optical signal transmission path after the cable laying. The submarine optical communication apparatus 1 includes a reception unit 11, a programmable control unit 12, and an optical component 13.

The reception unit 11 selectively receives the control signal SC superimposed or multiplexed with the main signal SM. The reception unit 11 converts the control signal SC that is an optical signal into an electric signal SE and outputs the electric signal SE to the programmable control unit 12 through a bus.

The reception unit 11 may transmit the received main signal SM and control signal SC to other components including the optical component 13 incorporated in the submarine optical communication apparatus 1. The reception unit 11 may transmit only the main signal SM to the other components including the optical component 13 incorporated in the submarine optical communication apparatus 1.

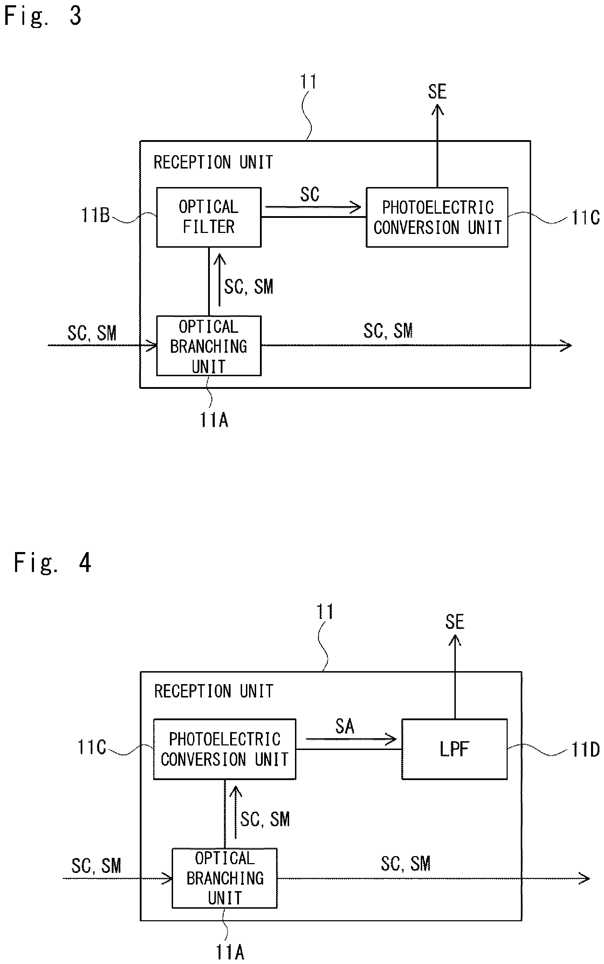

Here, a configuration of the reception unit 11 will be described. Fig. 3 schematically illustrates the configuration of the reception unit 11. In this example, the reception unit 11 includes an optical branching unit 11A, an optical filter 11B, and a photoelectric conversion unit 11C. The control signal SC is a single wavelength optical signal. The optical branching unit 11A is, for example, an optical coupler, and branches the main signal SM and control signal SC to the optical filter 11B and the optical component 13. The optical filter 11B is a wavelength selective filter and only the control signal SC passes through the optical filter 11B to the photoelectric conversion unit 11C. The photoelectric conversion unit 11C converts the control signal SC that is the optical signal into the electric signal SE and outputs the electric signal SE.

Another configuration of the reception unit 11 will be described. Fig. 4 schematically illustrates the other configuration of the reception unit 11. In this example, the reception unit 11 includes the optical branching unit 11A, the photoelectric conversion unit 11C, and a low pass filter (LPF) 11D. The control signal SC is the signal superimposed or multiplexed with the main signal SM by the fill-wave modulation. The optical branching unit 11A is, for example, the optical coupler as in Fig. 3, and branches the main signal SM and control signal SC to the photoelectric conversion unit 11C and the component 13. The photoelectric conversion unit 11 converts the main signal SM and control signal SC that are the optical signals into an electric signal SA and outputs the electric signal SA to the LPF 11D. The LPF 11D eliminates a high frequency component corresponding to the main signal SM from the electric signal SA and outputs the electric signal SE that is a low frequency component corresponding to the control signal SC

The programmable control unit 12 can receive a control instruction provided to the submarine optical communication apparatus 1 from the optical communication apparatus 9 by referring to the electric signal SE. The programmable control unit 12 can switch a control scheme of the optical component 13 in the programmable control unit 12 based on the received control instruction. For example, the programmable control unit 12 switches the control scheme used for controlling the optical component 13 set in the programmable control unit 12 based on a switching signal S1 (also referred to as a first switching signal) included in the received control instruction. The programmable control unit 12 generates a control signal CON according to the control scheme and output the control signal CON to the optical component 13 in order to control the optical component 13.

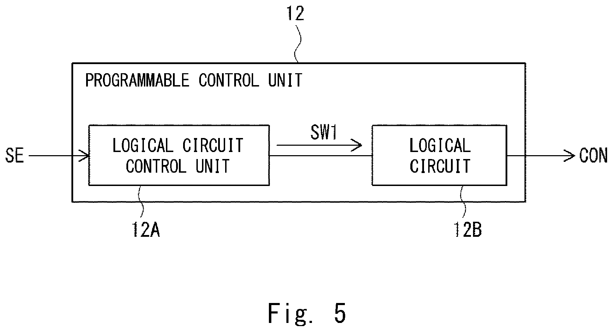

Fig. 5 schematically illustrates a configuration of the programmable control unit 12 according to the first example embodiment. The programmable control unit includes a logic circuit controlling unit 12A and a logic circuit 12B. The logic circuit controlling unit 12A changes a circuit configuration of the logic circuit 12B, for example, by providing the switching signal SW1 based on the electric signal SE received from the reception unit 11. The programmable control unit 12 achieves the switching of the control scheme used for controlling the optical component 13 by changing the circuit configuration of the logic circuit 12B. The programmable control unit 12 may be configured by FPGA (field-programmable gate array), FPAA (field-programmable analog array), or a combination thereof, for example. The logic circuit 12B generates the control signal CON used for controlling an operation of the optical component 13 based on the circuit configuration thereof.

The main signal SM and control signal SC input to the optical component 13 are output to an opposite terminal station (e.g. the terminal station T12) , for example, through the optical fiber FT2 that is connected to the optical component 13. Various optical components such as a wavelength selective switch (WSS) incorporated in the submarine optical communication apparatus 1 and an optical amplification device including a laser device can be applied to the optical component 13. The optical component 13 operates based on the control signal CON.

As described above, according to the present configuration, when the configuration of the submarine optical communication apparatus after the submarine optical communication apparatus has been disposed undersea, the control signal can be provided to the submarine optical communication apparatus through the submarine cable. Accordingly, it is possible to change a setting of the programmable control unit, specifically, the circuit configuration of the logic circuit. That is, it is possible to appropriately change a setting of the submarine optical communication apparatus after the submarine optical communication system has been installed. As a result, it is possible to flexibly change the transmission path in the submarine optical communication system.

### Second example embodiment

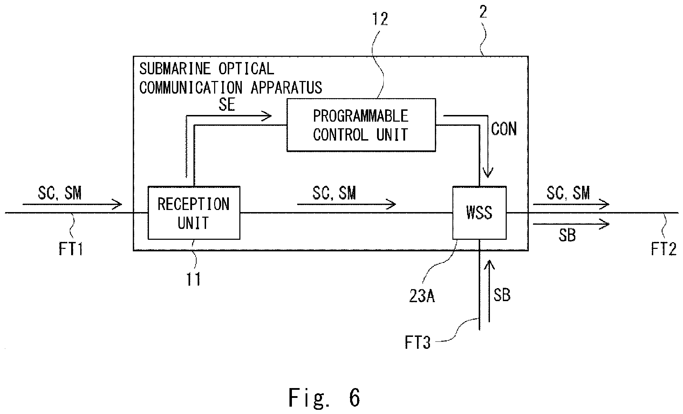

A submarine optical communication apparatus 2 according to a second example embodiment will be described. Fig. 6 schematically illustrates a configuration of the submarine optical communication apparatus 2 according to the second example embodiment. The submarine optical communication apparatus 2 includes a WSS 23A that is an example of the optical component 13. For example, the WSS 23A selectively branches signals of certain wavelengths from the main signal SM that is an input wavelength division multiplexed signal, and let signals of other wavelengths pass therethrough. The submarine optical communication apparatus including the WSS like the submarine optical communication apparatus 2 according to the present example embodiment may be operated as the submarine branching apparatus connected to the trunk station and the branch station. This submarine branching apparatus can achieve the optical signal communication among three or more terminal stations connected to the submarine branching apparatus by outputting the optical signal branched from an optical signal SB received from one terminal station to another terminal station through an optical fiber FT3 connected to the WSS 23A.

The programmable control unit 12 controls the WSS 23A with the control signal CON. Specifically, the programmable control unit 12 can change a bit rate of the control signal CON and select execution/non-execution of cyclic redundancy check (CRC) by changing the circuit configuration of the logic circuit 12B in response to the switching signal S1.

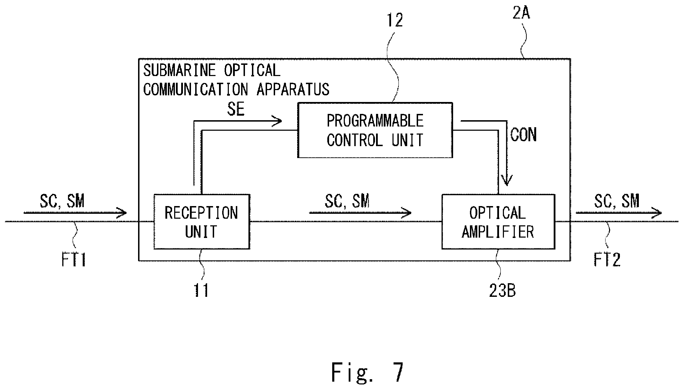

Next, an alternative example of the submarine optical communication apparatus 2 according to the second example embodiment will be described. Fig. 7 schematically illustrates the alternative example of the submarine optical communication apparatus according to the second example embodiment. The submarine optical communication apparatus 2A illustrated in Fig. 7 has a configuration in which the WSS 23A in the submarine optical communication apparatus 2 is replaced with an optical amplifier 23B.

The optical amplifier 23B can appropriately amplify the main signal SM and control signal SC according to the control by the programmable control unit 12. The optical amplifier 23B may include a monitoring unit to monitor optical power of the output optical signal.

The programmable control unit 12 controls the optical amplifier 23B using the control signal CON, for example. When the optical amplifier 23B includes the monitoring unit described above, the programmable control unit 12 can set a monitoring condition of the monitoring unit. Specifically, the programmable control unit 12 can set a threshold value used for optical power monitoring of the monitoring unit. The threshold value is set as a reference to determine that an error has occurred in the optical amplifier when the optical power lower than the set value is detected. Another threshold value for determining that the optical amplifier normally operates may be set when the optical power higher than the set value is detected. The programmable control unit 12 can change the threshold value generated by the logic circuit 12B by changing the circuit configuration of the logic circuit 12B in response to the control instruction. Accordingly, it is possible to change the threshold value set to the monitoring unit.

In the present configuration, when an error of the WSS or the optical amplifier (the laser device) is detected, the programmable control unit 12 may generate a response signal notifying the terminal station of the error. For example, when the submarine optical communication apparatus includes the optical amplifier and a signal generated by modulating a light output from a light source of the amplifier is output to the terminal station, the response signal may be transmitted to the terminal station by full-wave modulating the signal output to the terminal station so as to superimpose or multiplex the response signal therewith. The optical communication apparatus in the terminal station may generate the control signal SC in response to the reception of the response signal.

It should be appreciated that various optical components including the WSS and the optical amplifier described above may be incorporated in the submarine optical communication apparatus.

The programmable control unit 12 converts the received electric signal SE from analog to digital and performs the control of the optical component based on the conversion result. Thus, a noise may occur in the control signal SC during transmission. Thus, the error causing the programmable control unit 12 to determine that the noise signal is "1" may occur. In this case, it is possible to prevent a pulse corresponding to the noise from being determined as "1" by making a voltage level (threshold value) determined as "1" during the analog to digital conversion of the electric signal SE higher than the noise level or by increasing a pulse width (threshold value) determined as "1". The programmable control unit 12 can change one or both of the voltage level and the pulse width described above by changing the configuration of the logic circuit 12B.

The programmable control unit 12 can also change the logic circuit 12B according to a frame format of the control signal SC. For example, when the control signal SC is mapped in a payload part of the frame format such as SDH (Synchronous digital hierarchy), SONET (Synchronous optical network), and Ethernet, the logic circuit 12B can be changed using the switching signal S1 to be capable of executing termination process of the frame format data in which the control signal SC is mapped. By changing the logic circuit 12B, the programmable control unit 12 derives the control signal mapped in the payload and controls the optical components in response to the control signal.

As described above, according to the present configuration, when the setting of the submarine optical communication apparatus is changed after the submarine optical communication apparatus has been disposed undersea, the control signal can be provided to the submarine optical communication apparatus through the submarine cable. Accordingly, it is possible to change the setting of the programmable control unit, specifically, the circuit configuration of the logic circuit. Therefore, the control scheme of the optical components such as the WSS can be changed.

### Third example embodiment

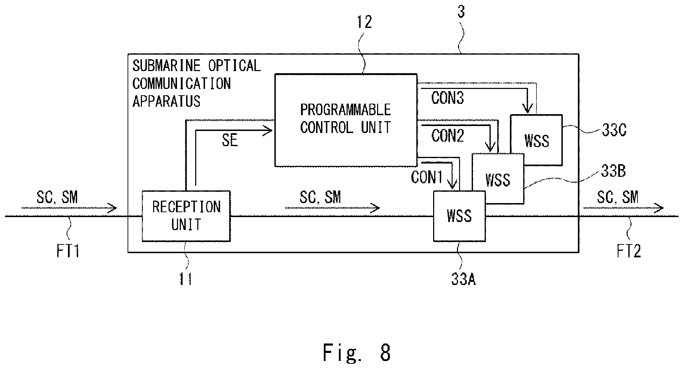

A submarine optical communication apparatus 3 according to a third example embodiment will be described. Fig. 8 schematically illustrates a configuration of the submarine optical communication apparatus 3 according to the third example embodiment. The submarine optical communication apparatus 3 is an alternative example of the submarine optical communication apparatus 2 and configured to include a plurality of WSSs. Fig. 8 illustrates an example in which the submarine optical communication apparatus 3 includes three WSSs 33A to 33C.

In the submarine optical communication apparatus 3, the control signal SC includes not only the switching signal S1 but also an address signal S2. The address signal S2 is a signal specifying addresses of components to be controlled among components disposed in the submarine optical communication apparatus 3.

When changing the circuit configuration of the programmable control unit 12, the address signal S2 is configured by information specifying the programmable control unit 12. When the address signal S2 specifies the programmable control unit 12, the programmable control unit 12 refers to the switching signal S1 and changes the circuit configuration of the logic circuit 12B.

When controlling at least one of the WSSs 33A to 33C, the address signal S2 includes the addresses for specifying the WSSs to be controlled. The programmable control unit 12 can output the control signal CON1 to CON3 to the WSSs specified by the address signal S2 to control the specified WSSs.

The control signal SC may include a command signal S3 provided to the components such as the WSS. In this case, the programmable control unit 12 can transmit a signal corresponding to the command signal S3 to the WSS specified by the address signal S2. Thus, the WSS specified by the address signal S2 can operate in response to the command signal S3. The operation of the WSS in response to the command signal includes adjustment of attenuation of each channel (each wavelength) and adjustment of a wavelength band in which Add/Drop is performed.

The optical components such as the WSSs 33A to 33C may include a programmable control unit configured by the FPGA, for example. In this case, the programmable control unit disposed in the WSS may refer to the address signal S2 to determine whether the WSS is specified. When the WSS incorporating the programmable control unit is specified, the circuit configuration of the programmable control unit may be changed in response to the switching signal (also referred to as a second switching signal) included in the control signal, or the WSS may operate in response to the command signal included in the control signal.

Although the example in which the three WSSs are disposed as the optical components has been described in the present example embodiment, the number of the WSSs may be two, or four or more. One or more optical components other than the WSS may be disposed instead of the WSS or with the WSS.

As described above, according to the present configuration, each component in the submarine optical communication apparatus can be individually controlled by the control signal after the submarine optical communication apparatus has been disposed undersea.

### Fourth example embodiment

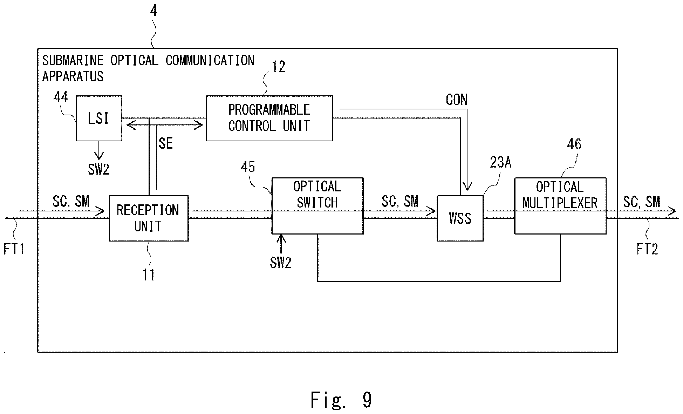

A submarine optical communication apparatus 4 according to a fourth example embodiment will be described. Fig. 9 schematically illustrates a configuration of the submarine optical communication apparatus according to the fourth example embodiment. The submarine optical communication apparatus 4 is an alternative example of the submarine optical communication apparatus 2 and has a configuration in which a large-scale integration (LSI) 44, an optical switch 45, and an optical multiplexer 46 are added to the submarine optical communication apparatus 2.

The LSI 44 is configured to be capable of receiving the electric signal SE generated by photoelectrically converting the control signal SC from the reception unit 11 through the bus. The LSI 44 refers to the address signal S2, and executes the command signal S3 when the address signal S2 includes the address specifying the LSI 44. The LSI 44 can perform switching of the optical switch 45, switching of a supply line of each optical component in the submarine optical communication apparatus 4, and restart of a power supply apparatus.

The LSI 44 may be configured to be capable of detecting a malfunction of each component in the submarine optical communication apparatus such 4 as the programmable control unit 12 and the WSS. For example, when an external optical communication apparatus or the like detects the malfunction of the component, the LSI 44 can recognize the malfunction of the component by including a signal notifying the malfunction of the programmable control unit 12 or a switching signal instructing to switch the optical switch into the control signal SC and transmitting the control signal SC to the LSI 44. The LSI 44 may also detect the malfunction of the component by monitoring each component or by the component notifying the LSI 44 of the malfunction thereof, for example.

The optical switch 45 is inserted between the reception unit 11 and the WSS 23A, for example. The optical multiplexer 46 is configured, for example, as an optical coupler and configured to be capable of outputting a light output from the WSS 23A and a light output from the optical switch 45 to the optical fiber FT2.

An operation of the submarine optical communication apparatus 4 will be described below. When the malfunction of the submarine optical communication apparatus 4 does not occur, the main signal SM and control signal SC output from the reception unit 11 are output to the optical fiber FT2 through the optical switch 45, the WSS 23A, and the optical multiplexer 46.

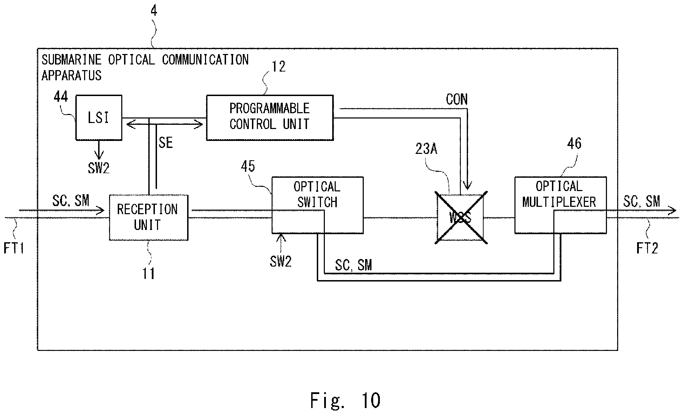

When the LSI 44 detects the malfunction of the submarine optical communication apparatus 4, the LSI 44 switches the optical switch 45 using the switching signal SW2 to switch the transmission path of the optical signal so as to output the optical signal to the outside without passing through the optical component in the submarine optical communication apparatus 4. Fig. 10 illustrates the switching of the optical signal transmission path when the malfunction of the submarine optical communication apparatus 4 according to the fourth example embodiment occurs. Here, an example of malfunction of the WSS 23A is illustrated. As illustrated in Fig. 10, when the malfunction of the WSS 23A occurs, by switching the optical switch 45, the main signal SM and control signal SC output from the reception unit 11 bypass the WSS 23A, passes through the optical switch 45 and the optical multiplexer 46, and are output to the optical fiber FT2.

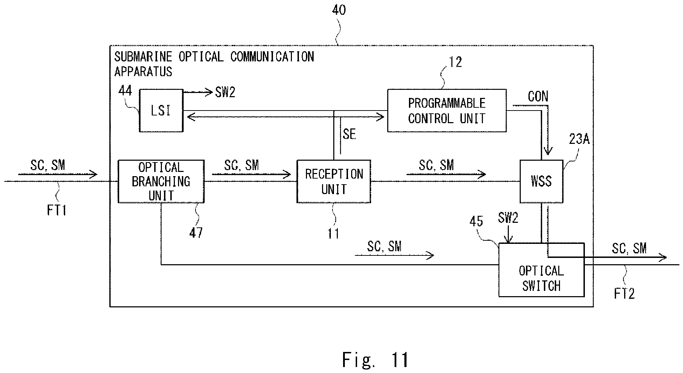

Next, an alternative example of the submarine optical communication apparatus 4 will be described. Fig. 11 illustrates the alternative example of the submarine optical communication apparatus according to the fourth example embodiment. The submarine optical communication apparatus 40 illustrated in Fig. 11 has a configuration in which the optical multiplexer 46 is removed from the submarine optical communication apparatus 4, an optical branching unit 47 is added thereto, and the arrangement of the optical switch 45 is changed.

The optical branching unit 47 is configured, for example, as an optical coupler and inserted between an optical signal input terminal of the submarine optical communication apparatus 40 and the reception unit 11. The optical branching unit 47 branches the input main signal SM and the input control signal SC to the reception unit 11 and the optical switch 45.

The optical switch 45 has two input terminal and one output terminal. One input terminal of the optical switch 45 is connected to one output terminal of the optical branching unit 47 and the other input terminal is connected to an output terminal of the WSS 23A. The output terminal of the optical switch 45 is connected to the optical fiber FT2.

An operation of the submarine optical communication apparatus 40 will be described below. When the malfunction of the submarine optical communication apparatus 40 does not occur, the main signal SM and control signal SC output from the optical branching unit 47 to the reception unit 11 are output to the optical fiber FT2 through the WSS 23A and the optical switch 45.

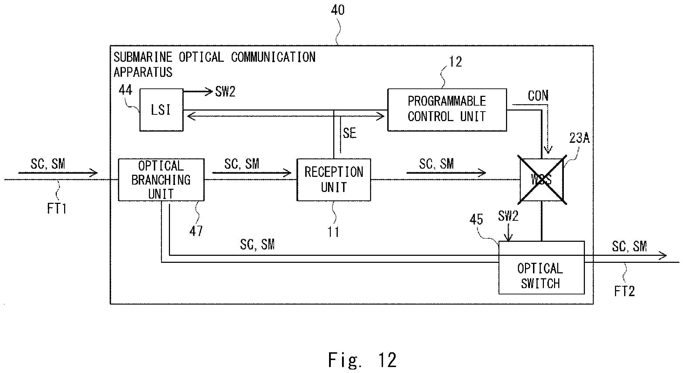

When the LSI 44 detects the malfunction of the submarine optical communication apparatus 40, the LSI 44 switches the optical switch 45 by the switching signal SW2 to switch the optical signal transmission path so as to output the optical signal to the outside without passing through the optical component in the submarine optical communication apparatus 40. Fig. 12 illustrates the switching of the optical signal transmission path when the malfunction of the submarine optical communication apparatus 40 according to the fourth example embodiment occurs. Here, an example of malfunction of the WSS 23A is illustrated. As illustrated in Fig. 12, when the malfunction of the WSS 23A occurs, by switching the optical switch 45, the main signal SM and control signal input from the optical branching unit 47 to optical switch 45 to the optical fiber FT2 without passing through the WSS 23A.

As described above, according to the present configuration, even when the malfunction of the submarine optical communication apparatus occurs, the optical signal can be output to the external transmission path without being lost in the submarine optical communication apparatus. Accordingly, even when the malfunction of the submarine optical communication apparatus occurs, the optical signal can be transmitted to the desired transmission target from another external submarine optical communication apparatus

### Fifth example embodiment

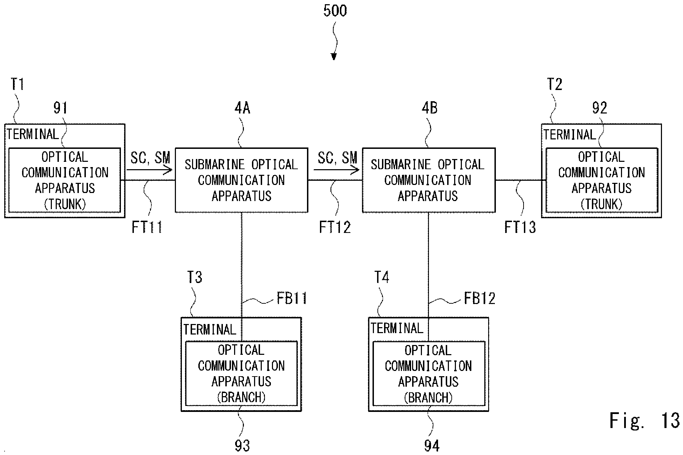

A submarine optical communication system 500 according to a fifth example embodiment will be described. Fig. 13 schematically illustrates a configuration of the submarine optical communication system 500 according to the fifth example embodiment. The submarine optical communication system 500 is an alternative example of the submarine optical communication system 400 and has a configuration in which a plurality of the submarine optical communication apparatuses are disposed.

As illustrated in Fig. 13, in the submarine optical communication system 500, the submarine optical communication apparatuses 4A and 4B are inserted between an optical communication apparatus 91 disposed in a land-based terminal station T1 and an optical communication apparatus 92 disposed in a land-based terminal station T2. The submarine optical communication apparatuses 4A and 4B have the same configuration as the submarine optical communication apparatus 4 or the submarine optical communication apparatus 40 described above.

The optical communication apparatus 91 is disposed in the terminal station T1 that is the trunk station and the optical communication apparatus 92 is disposed in the terminal station T2 that is the trunk station. An optical fiber FT11 incorporated in the submarine cable connects between the optical communication apparatus 91 and the submarine optical communication apparatus 4A. An optical fiber FT12 incorporated in the submarine cable connects between the submarine optical communication apparatus 4A and the submarine optical communication apparatus 4B. An optical fiber FT13 incorporated in the submarine cable connects between the submarine optical communication apparatus 4B and the optical communication apparatus 92. Thus, the optical communication apparatuses 91 and 92, and the submarine optical communication apparatus 4A and 4B constitute the trunk path through which the optical signal is transmitted.

An optical communication apparatus 93 is disposed in a land-based terminal station T3 that is the branch station. An optical fiber FB11 incorporated in the submarine cable connects between the submarine optical communication apparatus 4A and the optical communication apparatus 93. Thus, the optical communication apparatus 93 and the submarine optical communication apparatus 4A constitute the branch path.

An optical communication apparatus 94 is disposed in a land-based terminal station T4 that is the branch station. An optical fiber FB12 incorporated in the submarine cable connects between the submarine optical communication apparatus 4B and the optical communication apparatus 94. Thus, the optical communication apparatus 94 and the submarine optical communication apparatus 4B constitute the branch path.

The submarine optical communication apparatus 4A receives the optical signal including the main signal SM and control signal SC from the optical communication apparatus 91 in the terminal station T1. The submarine optical communication apparatus 4A can branch part or all of the received optical signal to the optical communication apparatus 93 in the terminal station T3 on the branch path, and can output part or all of the optical signal to the submarine optical communication apparatus 4B. The submarine optical communication apparatus 4A can receive the control signal SC with the reception unit 11 and operate in response to the control signal SC as described above.

The submarine optical communication apparatus 4B receives the optical signal including at least the control signal SC from the submarine optical communication apparatus 4A. The submarine optical communication apparatus 4B can branch part or all of the received optical signal to the optical communication apparatus 94 in the terminal station T4 on the branch path, and can output part or all of the received optical signal to the submarine optical communication apparatus 92 in the terminal station T2 on the trunk path. The submarine optical communication apparatus 4B can receive the control signal SC with the reception unit 11 and operate in response to the control signal SC as described above.

In the submarine optical communication system 500, the control signal SC may include not only the address specifying the component in the submarine optical communication apparatus but also an address specifying the submarine optical communication apparatus. In this case, each submarine optical communication apparatus can be individually controlled in the configuration including a plurality of the submarine optical communication apparatuses such as the submarine optical communication system 500.

The control signal SC may include the multicast address to specify all submarine optical communication apparatuses disposed in the submarine optical communication system 500 all at once. When the multicast address is included in the control signal SC, each submarine optical communication apparatus in the submarine optical communication system 500 can operate in response to the control signal SC as described above.

In the present configuration, the submarine optical communication apparatuses 4A and 4B can output the received optical signal to the trunk path even when the malfunction occurs as in the case of the submarine optical communication apparatus 4 described in the fourth example embodiment. Accordingly, it is possible to prevent interruption of the optical signal transmission and to maintain the communication quality.

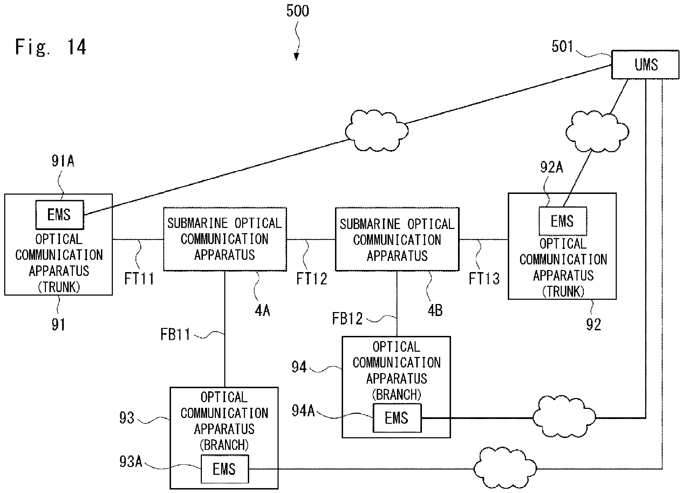

Next, another configuration of the submarine optical communication system 500 will be described. Fig. 14 schematically illustrates an alternative example of the submarine optical communication system according to the fifth example embodiment. Each of optical communication apparatuses 91 to 94 may include an element management system (EMS) that communicates with other optical communication apparatuses or the like for controlling the network configured by the submarine optical communication system 500. In this example, the optical communication apparatuses 91 to 94 include EMSs 91A to 94A, respectively.

The EMSs 91A to 94A may communicate using a dedicated wire communication line or a dedicated wireless communication line, or may communicate through a cloud network. Fig. 14 illustrates an example in which the EMSs 91 to 94 communicate with each other through the cloud network.

As illustrated in Fig. 14, the EMSs 91A to 94A can communicate with each other through the cloud network controlled by a network monitoring apparatus 501 (unified management system: UMS). Note that a SDN (Software Defined Network) controller may be used instead of the UMS and the SDN controller may be set on the cloud. The SDN controller can control the transmission path or the wavelength of the optical signal in the submarine optical communication system according to the network condition or the instruction from an operator. Further, the SDN controller can virtually manage a physical network topology or resource of the submarine optical communication system and allow plural users or operators to share the system.

It should be appreciated that the number of the submarine optical communication apparatuses and the number of the branch terminal stations are not limited to the above example.

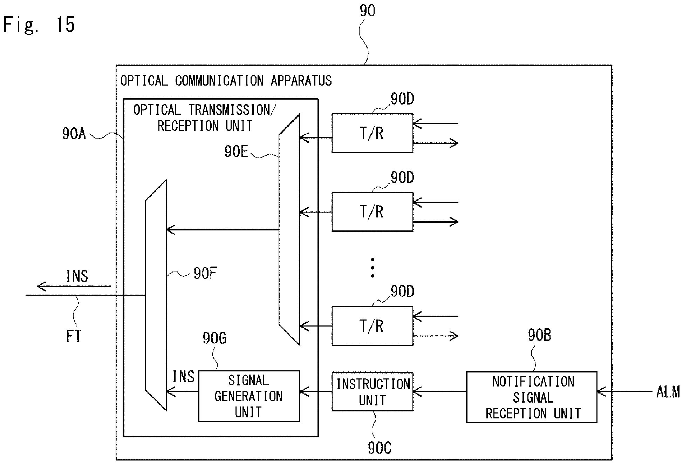

A configuration example of an optical communication apparatus that is used on land and includes the EMS described above will be described. Fig. 15 illustrates the configuration example of the optical communication apparatus according to the fifth example embodiment. The optical communication apparatus 90 in Fig. 15 is used as each of the above-described optical communication apparatuses 91 to 94.

The optical communication apparatus 90 includes an optical transmission/reception unit 90A, a notification signal reception unit 90B, and an instruction unit 90C.

The optical transmission/reception unit 90A can output the main signal to an optical fiber FT incorporated in the submarine cable and output an instruction signal INS for instructing switching of the main signal transmission path according to a request from the instruction unit 90C. The optical transmission/reception unit 90A can also receive the optical signal.

In this case, a wavelength division multiplexed signal modulated with a modulation scheme such as DP-QPSK (Dual Polarization-Quadrature Phase Shift Keying) is used as the main signal.

The notification signal reception unit 90B is configured as the above-described EMS. The notification signal reception unit 90B receives a notification signal ALM, for example, notifying an occurrence of an error from another optical communication apparatus, and notifies the instruction unit 90C of the notification result.

The instruction unit 90C refers to the notification result received from the notification signal reception unit 90B and causes the optical transmission/reception unit 90A to output the instruction signal INS for switching the main signal transmission path from the branch path to the trunk path when the branch path has failed.

The instruction signal INS may be superimposed or multiplexed with the main signal and output to the external submarine optical communication apparatus. A signal of a wavelength other than the wavelengths used in the main signal may be used as the instruction signal INS. The instruction signal INS may be superimposed or multiplexed with the main signal by full-wave modulating the main signal.

Next, a configuration of the optical transmission/reception unit 90A will be described. The optical transmission/reception unit 90A may be configured such that two or more optical transponders 90D can be connected thereto. Transponders fabricated by various venders and configured according to various standards may be applied to the optical transponders 90D. Further, optical transmission/reception unit 90A may be configured as an OCI (Open Cable Interface).

For example, the optical signals output from the two or more optical transponders 90D are multiplexed by a multiplexer 90E in the optical transmission/reception unit 90A and the multiplexed main signal is output to a multiplexer 90F. The instruction unit 90C controls a signal generation unit 90G in the optical transmission/reception unit 90A so that the signal generation unit 90G outputs the instruction signal INS to the multiplexer 90F. The main signal and the instruction signal INS are multiplexed by the multiplexer and the multiplexed signal is output to the optical fiber FT.

As described above, it can be understood that the submarine optical communication system can be constructed using not only the dedicated line but also the open cloud network.

### Other example embodiment

Note that the present disclosure is not limited to the example embodiments mentioned above and can be modified as appropriate. For example, in the example embodiments described above, the monitoring signal was output to the uplink optical fiber of the branch path and the monitoring signal which was received via the downlink optical fiber has been detected, and, however, this is merely an example. In other words, a configuration in which the monitoring signal is output to the downlink optical fiber of the branch path and the monitoring signal which was received via the uplink optical fiber is detected as the monitoring signal may be adopted.

In the example embodiments described above, although it has been described that the receiver receives the DP-QPSK optical signal, this is merely an example. For example, it may be configured such that optical signals of other modulation schemes can be transmitted.

The present disclosure has been described above with reference to the example embodiments, however, the present disclosure is not to be limited to the aforementioned disclosure. The configuration and the details of the present disclosure can be modified in various ways within the scope of the invention as defined by the claims.

This application is based upon and claims the benefit of priority from Japanese patent application No. 2017-240976, filed on December 15, 2017.

### Reference Signs List

1 TO 4, 2A, 4A, 4B SUBMARINE OPTICAL COMMUNICATION APPARATUSES
9, 90 TO 94 OPTICAL COMMUNICATION APPARATUSES
11 RECEPTION UNIT
11A BRANCHING UNIT
11B OPTICAL FILTER
11C PHOTOELECTRIC CONVERSION UNIT
12 PROGRAMMABLE CONTROL UNIT
12A LOGIC CIRCUIT CONTROLLING UNIT
12B LOGIC CIRCUIT
13 OPTICAL COMPONENT
23A, 33A, 33B, 33CWSSs
23B OPTICAL AMPLIFIER
44 LSI
45 OPTICAL SWITCH
46 MULTIPLEXER
47 OPTICAL BRANCHING UNIT
90A OPTICAL TRANSMISSION/RECEPTION UNIT
90B NOTIFICATION SIGNAL RECEPTION UNIT
90C INSTRUCTION UNIT
90D OPTICAL TRANSPONDER
90E, 90F MULTIPLEXERS
90G SIGNAL GENERATION UNIT
100, 400, 500 SUBMARINE OPTICAL COMMUNICATION SYSTEMS
ALM NOTIFICATION SIGNAL
CON, CON1 TO CON3 CONTROL SIGNALS
FT, FT1 TO FT3, FT11 TO FT13, FB11, FB12 OPTICAL FIBERS
S1 SWITCHING SIGNAL
S2 ADDRESS SIGNAL
S3 COMMAND SIGNAL
SC CONTROL SIGNAL
SM MAIN SIGNAL
SA, SE ELECTRIC SIGNALS
SB OPTICAL SIGNAL
SW1, SW2 SWITCHING SIGNAL
T1 TO T4, T11, T12 TERMINAL STATIONS

## Claims

1. A submarine optical communication apparatus comprising:
an optical component (13) configured to process an optical signal output from an optical communication apparatus (9);
a control unit (12) configured to control the optical component (13); and
a reception unit (11) configured to receive the optical signal and a control signal, convert the control signal into an electric signal, and output the converted signal to the control unit (12), wherein
the control unit (12) switches a control scheme of the optical component (13) in response to the control signal converted into the electric signal, wherein
the control unit (12) comprises a programmable logic circuit (12B),
the control signal includes a first switching signal instructing to change a circuit configuration of the programmable logic circuit (12B), and
the control unit (12) changes the circuit configuration of the programmable logic circuit (12B) in response to the switching signal converted into the electric signal to change the control scheme of the optical component (13).

2. The submarine optical communication apparatus according to claim 1, wherein
the control signal includes an address signal and a command signal, and
the control unit (12) outputs a signal based on the command signal to the optical component (9) specified by the address signal.

3. The submarine optical communication apparatus according to claim 2, wherein
the optical component (9) comprises a programmable control unit controlling an operation of the optical component,
the reception unit (11) adapted to convert the control signal into the electric signal and to output the converted signal to the optical component,
the control signal includes a second switching signal instructing to change the control scheme of the optical component in the programmable control unit (12B), and
the optical component (9) specified by the address signal changes the control scheme of the optical component in the programmable control unit (12B) in response to the second switching signal and operates in response to the command signal.

4. The submarine optical communication apparatus according to any one of claims 1 to 3, further comprising:
an optical switch (45) configured to be capable of outputting the optical signal and the control signal input from the reception unit (11) to either of the optical component (9) and the outside of the submarine optical communication apparatus; and
an integrated circuit configured to switch the optical switch (45) in response to the control signal converted into the electric signal by the reception unit (11), wherein
in a state in which the optical signal and the control signal are output from the optical switch to the optical component, the integrated circuit switches the optical switch such that the optical signal and the control signal are output from the optical switch to the outside of the submarine optical communication apparatus without passing through the optical component, in response to a switching signal of a switch included in the control signal or when an occurrence of malfunction is notified from one or both of the control unit (12) and the optical component (9).

5. The submarine optical communication apparatus according to any one of claims 1 to 3, further comprising:
an optical branching unit (47) configured to branch the input optical signal and the input control signal into two and output the optical signal and the control signal in one of the branched two to the reception unit (11);
an optical switch (45) configured to be capable of outputting either of the optical signal and the control signal input from the optical component, and the optical branching unit (47) outputting the optical signal and the control signal in the other of the branched two branched by the optical branching unit to the reception unit, to the outside of the submarine optical communication apparatus; and
an integrated circuit configured to switch the optical switch in response to the control signal converted into the electric signal by the reception unit, wherein
in a state in which the optical signal and the control signal input from the optical component are output from the optical switch(45) to the outside of the submarine optical communication apparatus, the integrated circuit switches the optical switch (45) such that the optical signal and the control signal input from the optical branching unit (47) are output from the optical switch (45) to the outside of the submarine optical communication apparatus, in response to a switching signal of a switch included in the control signal or when an occurrence of malfunction is notified from one or both of the control unit and the optical component.

6. The submarine optical communication apparatus according to any one of claims 1 to 5, wherein the control unit (12) switches the control scheme of the optical component in response to the control signal to change a bit rate of the signal provided to the optical component.

7. The submarine optical communication apparatus according to any one of claims 1 to 5, wherein, when the optical component (9) outputs a light and monitors power of the light, the control unit (12) switches the control scheme of the optical component in response to the control signal to change a threshold value used by the optical component for monitoring the power of the light.

8. The submarine optical communication apparatus according to any one of claims 1 to 7, wherein
the control unit (12) is configured to be capable of switching the control scheme of the optical component (9) in response to a digital signal generated by converting the control signal converted into the electric signal from analog to digital, and
the control unit (12) switches the control scheme of the optical component (9) to change a threshold value of a voltage and a threshold value of a pulse width of the electric signal used when converting the control signal converted into the electric signal from analog to digital.

9. The submarine optical communication apparatus according to any one of claims 1 to 8, wherein the control signal is any one of a signal having a wavelength other than wavelengths used in the optical signal, a signal having a wavelength that is the same as any one of the wavelengths used in the optical signal, and a signal generated by full-wave modulating the optical signal.

10. A submarine optical communication system comprising:
an optical communication apparatus configured to output an optical signal and a control signal; and
a submarine optical communication apparatus according to any of claims 1 to 9, configured to receive the optical signal and the control signal from the optical communication apparatus.

## Patentansprüche

1. Optische Unterwasserkommunikationsvorrichtung, die Folgendes aufweist:
eine optische Komponente (13), die zum Verarbeiten eines optischen Ausgangs von einer optischen Kommunikationsvorrichtung (9) konfiguriert ist;
eine Steuereinheit (12), die zum Steuern der optischen Komponente (13) konfiguriert ist; und
eine Empfangseinheit (11), die zum Empfangen des optischen Signals und eines Steuersignals, Umwandeln des Steuersignals in ein elektrisches Signal und Ausgeben des umgewandelten Signals an die Steuereinheit (12) konfiguriert ist, wobei
die Steuereinheit (12) ein Steuerungsschema der optischen Komponente (13) als Reaktion auf das in das elektrische Signal umgewandelte Steuersignal schaltet, wobei
die Steuereinheit (12) eine speicherprogrammierbare Schaltung (12B) aufweist,
das Steuersignal ein erstes Schaltsignal beinhaltet, das zum Ändern einer Schaltungskonfiguration der speicherprogrammierbaren Schaltung (12B) anweist, und
die Steuereinheit (12) die Schaltungskonfiguration der speicherprogrammierbaren Schaltung (12B) als Reaktion auf das in das elektrische Signal umgewandelte Schaltsignal ändert, um das Steuerungsschema der optische Komponente (13) zu ändern.

2. Optische Unterwasserkommunikationsvorrichtung nach Anspruch 1, wobei
das Steuersignal ein Adresssignal und ein Befehlssignal beinhaltet und
die Steuereinheit (12) ein Signal auf Basis des Befehlssignals an die von dem Adresssignal vorgegebene optische Komponente (9) ausgibt.

3. Optische Unterwasserkommunikationsvorrichtung nach Anspruch 2, wobei
die optische Komponente (9) eine programmierbare Steuereinheit aufweist, die den Betrieb der optischen Komponente steuert,
die Empfangseinheit (11) zum Umwandeln des Steuersignals in das elektrische Signal und zum Ausgeben des umgewandelten Signal an die optische Komponente eingerichtet ist,
das Steuersignal ein zweites Schaltsignal beinhaltet, das zum Ändern des Steuerungsschemas der optischen Komponente in der programmierbaren Steuereinheit (12B) anweist, und
die vom Adresssignal vorgegebene optische Komponente (9) das Steuerungsschema der optischen Komponente in der programmierbaren Steuereinheit (12B) als Reaktion auf das zweite Schaltsignal ändert und als Reaktion auf das Befehlssignal arbeitet.

4. Optische Unterwasserkommunikationsvorrichtung nach einem der Ansprüche 1 bis 3, die ferner Folgendes aufweist:
einen optischen Schalter (45), der konfiguriert ist, um das optische Signal und das Steuersignal, die von der Empfangseinheit (11) her eingegeben werden, an entweder die optische Komponente (9) oder an außerhalb der optischen Unterwasserkommunikationsvorrichtung ausgeben zu können; und
eine integrierte Schaltung, die zum Schalten des optischen Schalters (45) als Reaktion auf das von der Empfangseinheit (11) in das elektrische Signal umgewandelte Steuersignal konfiguriert ist, wobei
in einem Zustand, in dem das optische Signal und das Steuersignal vom optischen Schalter an die optische Komponente ausgegeben werden, die integrierte Schaltung den optischen Schalter als Reaktion auf ein Schaltsignal eines Schalters, das im Steuersignal enthalten ist, oder bei Melden des Auftretens einer Störung von der Steuereinheit (12) und/oder der optischen Komponente (9) so umschaltet, dass das optische Signal und das Steuersignal vom optischen Schalter an außerhalb der optischen Unterwasserkommunikationsvorrichtung ausgegeben werden, ohne die optische Komponente zu durchlaufen.

5. Optische Unterwasserkommunikationsvorrichtung nach einem der Ansprüche 1 bis 3, die ferner Folgendes aufweist:
eine optische Verzweigungseinheit (47), die zum Verzweigen des eingegebenen optischen Signals und des eingegebenen Steuersignals in zwei und zum Ausgeben des optischen Signals und des Steuersignals in eines der verzweigten zwei an die Empfangseinheit (11) konfiguriert ist;
einen optischen Schalter (45), der konfiguriert ist, um das optische Signal oder das Steuersignal, die von der optischen Komponente her eingegeben werden, ausgeben zu können, und wobei die optische Verzweigungseinheit (47) das optische Signal und das Steuersignal in der anderen der verzweigten zwei, die von der optischen Verzweigungseinheit verzweigt werden, an außerhalb der optischen Unterwasserkommunikationsvorrichtung ausgibt; und
eine integrierte Schaltung, die zum Schalten des optischen Schalters als Reaktion auf das von der Empfangseinheit in das elektrische Signal umgewandelte Steuersignal konfiguriert ist, wobei
in einem Zustand, in dem das optische Signal und das Steuersignal, die von der optischen Komponente her eingegeben werden, vom optischen Schalter (45) an außerhalb der optischen Unterwasserkommunikationsvorrichtung ausgegeben werden, die integrierte Schaltung den optischen Schalter (45) als Reaktion auf ein Schaltsignal eines Schalters, das im Steuersignal enthalten ist, oder bei Melden des Auftretens einer Störung von der Steuereinheit und/oder der optischen Komponente so umschaltet, dass das optische Signal und das Steuersignal, die von der optischen Verzweigungseinheit (47) her eingegeben werden, vom optischen Schalter (45) an außerhalb der optischen Unterwasserkommunikationsvorrichtung ausgegeben werden.

6. Optische Unterwasserkommunikationsvorrichtung nach einem der Ansprüche 1 bis 5, wobei die Steuereinheit (12) das Steuerungsschema der optischen Komponente als Reaktion auf das Steuersignal umschaltet, um eine Bitrate des an die optische Komponente angelegten Signals zu ändern.

7. Optische Unterwasserkommunikationsvorrichtung nach einem der Ansprüche 1 bis 5, wobei, wenn die optische Komponente (9) ein Licht ausgibt und die Leistung des Lichts überwacht, die Steuereinheit (12) das Steuerungsschema der optischen Komponente als Reaktion auf das Steuersignal umschaltet, um einen von der optischen Komponente zum Überwachen der Leistung des Lichts verwendeten Schwellenwert zu ändern.

8. Optische Unterwasserkommunikationsvorrichtung nach einem der Ansprüche 1 bis 7, wobei
die Steuereinheit (12) konfiguriert ist, um das Steuerungsschema der optischen Komponente (9) als Reaktion auf ein digitales Signal umschalten zu können, das durch Umwandeln des in das elektrische Signal umgewandelten Steuersignals von analog in digital erzeugt wird, und
und die Steuereinheit (12) das Steuerungsschema der optischen Komponente (9) umschaltet, um einen Schwellenwert einer Spannung und einen Schwellenwert einer Pulsbreite des elektrischen Signals, das beim Umwandeln des in das elektrische Signal umgewandelten Steuersignals von analog in digital verwendet wird.

9. Optische Unterwasserkommunikationsvorrichtung nach einem der Ansprüche 1 bis 8, wobei das Steuersignal eines von einem Signal mit einer anderen Wellenlänge als im optischen Signal verwendeten Wellenlängen, einem Signal mit einer Wellenlänge, die mit einer der im optischen Signal verwendeten Wellenlängen übereinstimmt, und ein Signal, das durch Vollwellen-Modulation des optischen Signals erzeugt wird, ist.

10. Optisches Unterwasserkommunikationssystem, das Folgendes aufweist:
eine optische Kommunikationsvorrichtung, die zum Ausgeben eines optischen Signals und eines Steuersignals konfiguriert ist, und
eine optische Unterwasserkommunikationsvorrichtung nach einem der Ansprüche 1 bis 9, die zum Empfangen eines optischen Signals und des Steuersignals von der optischen Kommunikationsvorrichtung konfiguriert ist.

## Revendications

1. Appareil de communication optique sous-marin comprenant :
un composant optique (13) configuré pour traiter une sortie de signaux optiques d'un appareil de communication optique (9) ;
une unité de contrôle (12) configurée pour contrôler le composant optique (13) ; et
une unité de réception (11) configurée pour recevoir le signal optique et un signal de contrôle, convertir le signal de contrôle en un signal électrique, et sortir le signal converti à l'unité de contrôle (12), dans lequel
l'unité de contrôle (12) commute un plan de contrôle du composant optique (13) en réponse au signal de contrôle converti en le signal électrique, dans lequel
l'unité de contrôle (12) comprend un circuit logique programmable (12B),
le signal de contrôle comprend un premier signal de commutation donnant l'instruction de changer une configuration de circuit du circuit logique programmable (12B), et
l'unité de contrôle (12) change la configuration de circuit du circuit logique programmable (12B) en réponse au signal de commutation converti en le signal électrique pour changer le plan de contrôle du composant optique (13).

2. Appareil de communication optique sous-marin selon la revendication 1, dans lequel
le signal de contrôle comprend un signal d'adresse et un signal de commande, et
l'unité de contrôle (12) sort un signal sur la base du signal de commande au composant optique (9) spécifié par le signal d'adresse.

3. Appareil de communication optique sous-marin selon la revendication 2, dans lequel
le composant optique (9) comprend une unité de contrôle programmable contrôlant un fonctionnement du composant optique,
l'unité de réception (11) étant adaptée pour convertir le signal de contrôle en le signal électrique et sortir le signal converti au composant optique,
le signal de contrôle comprend un deuxième signal de commutation donnant l'instruction de changer le plan de contrôle du composant optique dans l'unité de contrôle programmable (12B), et
le composant optique (9) spécifié par le signal d'adresse change le plan de contrôle du composant optique dans l'unité de contrôle programmable (12B) en réponse au deuxième signal de commutation et fonctionne en réponse au signal de commande.

4. Appareil de communication optique sous-marin selon l'une quelconque des revendications 1 à 3, comprenant en outre :
un commutateur optique (45) configuré pour être capable de sortir le signal optique et le signal de contrôle entrés de l'unité de réception (11) soit au composant optique (9) soit à l'extérieur de l'appareil de communication optique sous-marin ; et
un circuit intégré configuré pour commuter le commutateur optique (45) en réponse au signal de contrôle converti en le signal électrique par l'unité de réception (11), dans lequel
dans un état dans lequel le signal optique et le signal de contrôle sont sortis du commutateur optique au composant optique, le circuit intégré commute le commutateur optique de sorte que le signal optique et le signal de contrôle sont sortis du commutateur optique à l'extérieur de l'appareil de communication optique sous-marin sans passer à travers le composant optique, en réponse à un signal de commutation d'un commutateur inclus dans le signal de contrôle ou lorsqu'un cas de mauvais fonctionnement est notifié de l'un de l'unité de contrôle (12) et du composant optique (9) ou des deux.

5. Appareil de communication optique sous-marin selon l'une quelconque des revendications 1 à 3, comprenant en outre :
une unité de branchement optique (47) configurée pour brancher le signal optique entré et le signal de contrôle entré en deux et sortir le signal optique et le signal de contrôle dans l'un des deux branchés à l'unité de réception (11) ;
un commutateur optique (45) configuré pour être capable de sortir soit le signal optique soit le signal de contrôle entrés du composant optique, et l'unité de branchement optique (47) sortant le signal optique et le signal de contrôle dans l'autre des deux branchés, branchés par l'unité de branchement optique à l'unité de réception, à l'extérieur de l'appareil de communication optique sous-marin ; et
un circuit intégré configuré pour commuter le commutateur optique en réponse au signal de contrôle converti en le signal électrique par l'unité de réception, dans lequel
dans un état dans lequel le signal optique et le signal de contrôle entrés du composant optique sont sortis du commutateur optique (45) à l'extérieur de l'appareil de communication optique sous-marin, le circuit intégré commute le commutateur optique (45) de sorte que le signal optique et le signal de contrôle entrés de l'unité de branchement optique (47) sont sortis du commutateur optique (45) à l'extérieur de l'appareil de communication optique sous-marin, en réponse à un signal de commutation d'un commutateur inclus dans le signal de contrôle ou lorsqu'un cas de mauvais fonctionnement est notifié de l'un de l'unité de contrôle et du composant optique ou des deux.

6. Appareil de communication optique sous-marin selon l'une quelconque des revendications 1 à 5, dans lequel l'unité de contrôle (12) commute le plan de contrôle du composant optique en réponse au signal de contrôle pour changer un débit binaire du signal fourni au composant optique.

7. Appareil de communication optique sous-marin selon l'une quelconque des revendications 1 à 5, dans lequel, lorsque le composant optique (9) sort une lumière et surveille une puissance de la lumière, l'unité de contrôle (12) commute le plan de contrôle du composant optique en réponse au signal de contrôle pour changer une valeur seuil utilisée par le composant optique pour surveiller la puissance de la lumière.

8. Appareil de communication optique sous-marin selon l'une quelconque des revendications 1 à 7, dans lequel
l'unité de contrôle (12) est configurée pour être capable de commuter le plan de contrôle du composant optique (9) en réponse à un signal numérique généré en convertissant le signal de contrôle converti en le signal électrique d'analogique à numérique, et
l'unité de contrôle (12) commute le plan de contrôle du composant optique (9) pour changer une valeur seuil d'une tension et une valeur seuil d'une largeur d'impulsion du signal électrique utilisé en convertissant le signal de contrôle converti en le signal électrique d'analogique à numérique.

9. Appareil de communication optique sous-marin selon l'une quelconque des revendications 1 à 8, dans lequel le signal de contrôle est l'un quelconque d'un signal ayant une longueur d'onde autre que les longueurs d'ondes utilisées dans le signal optique, un signal ayant une longueur d'onde qui est la même que l'une quelconque des longueurs d'ondes utilisées dans le signal optique, et un signal généré en modulant en pleine onde le signal optique.

10. Système de communication optique sous-marin comprenant :
un appareil de communication optique configuré pour sortir un signal optique et un signal de contrôle ; et
un appareil de communication optique sous-marin selon l'une quelconque des revendications 1 à 9, configuré pour recevoir le signal optique et le signal de contrôle de l'appareil de communication optique.
